# EUROPEAN PATENT APPLICATION

(11) **EP 2 211 559 A1**
(43) Date of publication of application: **28.07.2010**
(21) Application number: 08843574.8
(22) Date of filing: 28.10.2008
(51) Int. Cl.: H04Q 9/00, H04M 11/00

(54) **REMOTE MONITORING SYSTEM**

(30) Priority: 31.10.2007 JP 2007284443
(71) Applicant: Daikin Industries, Ltd., Osaka 530-8323 (JP)
(72) Inventor: KAWAI, Seiji, Kusatsu-shi Shiga 525-8526 (JP); IWATA, Masataka, Kusatsu-shi Shiga 525-8526 (JP)
(74) Representative: Goddar, Heinz J.
(86) International application number: PCT/JP2008/069492
(87) International publication number: WO 2009/057571

(57) **Abstract**

It is a problem of the present invention to provide a remote monitoring system that issues a failure report to an extent that a concerned party does not feel burdened when a failure has occurred in a facility device or a management device. A remote monitoring system (10) is equipped with operating data receiving means (24), failure report transmitting means (14g), new failure determining means (14e), repair progress data generating means (14f) and repair progress updating means (7, 22, 14c). The operating data receiving means receives failure data from a facility device (5) or a management device (3). The failure report transmitting means transmits a failure report corresponding to a failure data to the concerned party. The new failure determining means determines whether or not the failure data are new. The repair progress data generating means generates repair progress data using repair progress of the failure as a first state when the failure data are new. The repair progress updating means is capable of updating the repair progress of the repair progress data from the first state to a second state. The failure report transmitting means stops transmission of the failure report when the repair progress is the second state.

## Description

### TECHNICAL FIELD

The present invention relates to a remote monitoring system that is connected via a public line to a facility device and a management device that manages that facility device, with the remote monitoring system processing operating data of the facility device transmitted from the facility device or the management device.

### BACKGROUND ART

There are remote monitoring systems that are connected via a public line to a facility device and a management device that manages that facility device, with the remote monitoring system processing operating data of the facility device transmitted from the facility device or the management device. These remote monitoring systems monitor whether a failure is occurring in the facility device, for example, on the basis of the operating data they have acquired. Conventionally, among these remote monitoring systems, there is a remote monitoring system that issues a failure report by email or the like, for example, to a remote monitoring system manager, a person in charge of maintenance or a user (hereinafter called "the concerned party") when a failure has occurred in the facility device (see patent document 1).
Patent Document 1: JP-ANo. 2006-19077

### DISCLOSURE OF THE INVENTION

### <Technical Problem>

However, there is the potential for the concerned party to feel burdened if the remote monitoring system always issues a failure notification to the concerned party when a failure has occurred in the facility device or the management device.

It is problem of the present invention to provide a remote monitoring system that issues a failure report to an extent that the concerned party does not feel burdened when a failure has occurred in the facility device or the management device.

### <Solution to the Problem>

A remote monitoring system pertaining to a first aspect of the invention is equipped with operating data receiving means, failure report transmitting means, new failure determining means, repair progress data generating means and repair progress updating means. The operating data receiving means is connected via a line to a facility device or a management device that manages the facility device, with the operating data receiving means receiving, as one set of operating data, failure data transmitted from the facility device or the management device. The failure report transmitting means transmits a failure report associated with the failure data to a concerned party who is a remote monitoring system manager, a person in charge of maintenance and a user when the failure report transmitting means has received the failure data. The new failure determining means determines whether or not the failure data are new. The repair progress data generating means generates repair progress data using repair progress of the failure as a first state when the failure data are new. The repair progress updating means is capable of the concerned party updating and inputting the repair progress of the repair progress data from the first state to a second state differing from the first state. The failure report transmitting means stops transmission of the failure report when the repair progress is the second state.

In the present invention, the remote monitoring system determines whether or not the failure data transmitted when the facility device or the management device has failed are new and issues a failure report by email or the like, for example, to the concerned party when the failure data are new. Further, the repair progress data registered when the failure data are new are utilized to determine whether or not the failure data are new.

Consequently, the remote monitoring system transmits a failure report only when the failure data are new, and the remote monitoring system can stop the failure report when the same type of failure continues to occur, for example. For this reason, a situation where the remote monitoring system transmits the same type of failure report several times to the concerned party can be prevented, and a situation where the concerned party feels burdened can be controlled.

A remote monitoring system pertaining to a second aspect of the invention is the remote monitoring system pertaining to the first aspect of the invention, wherein the repair progress updating means is further capable of updating the repair progress from the first state or the second state to a third state differing from the first state and the second state.

In the present invention, the repair progress can be updated from the first state (e.g., "new") to the second state (e.g., "being repaired" or "being followed") and can also be updated from the second state to the third state (e.g., "repair completed") by the repair progress updating means. Consequently, the repair progress can be managed in greater detail.

A remote monitoring system pertaining to a third aspect of the invention is the remote monitoring system pertaining to the second aspect of the invention, wherein the new failure determining means determines that the failure data are new when there are no repair progress data corresponding to the failure data or when the repair progress of the repair progress data corresponding to the failure data is the third state.

In the present invention, the new failure determining means determines that the failure data are new when there are no repair progress data corresponding to the failure data or when the repair progress of the repair progress data corresponding to the failure data is "repair completed".

Consequently, the failure report transmitting means does not transmit a failure report even when it has again received failure data relating to a failure for which it has already transmitted a failure report and for which repair has not been completed. For this reason, a situation where the remote monitoring system transmits the same type of failure report several times to the concerned party can be prevented, and a situation where the concerned party feels burdened can be controlled.

A remote monitoring system pertaining to a fourth aspect of the invention is the remote monitoring system pertaining to the second or third aspect of the invention, wherein the operating data receiving means is further capable of receiving, as one set of the operating data, failure resolution data transmitted by the facility device or the management device when the failure has been resolved. Further, the repair progress updating means updates the repair progress of the repair progress data corresponding to the failure from the first state or the second state to the third state when the failure resolution data are received.

In the present invention, when the operating data receiving means has received the failure resolution data, the repair progress updating means automatically updates the repair progress of the repair progress data corresponding to that failure from the first state or the second state to the third state. The "first state" referred to here represents "new", which indicates that repair progress data have been newly created, for example. Further, the "second state" referred to here represents "being repaired", which is a state where repair has been requested with respect to the failure, or "being followed", which is a state where the course of the repair is being followed, for example. Further, the "third state" referred to here represents "repair completed", which is a state where the failure has been resolved, for example.

Consequently, when the failure has been resolved, such as when repair has been completed, for example, the remote monitoring system can automatically update the repair progress from the first state or the second state to the third state. That is, the remote monitoring system can utilize the fact that the failure has been resolved to automatically reflect this in the repair progress. For this reason, the burden involved in the concerned party updating the repair progress can be alleviated.

A remote monitoring system pertaining to a fifth aspect of the invention is the remote monitoring system pertaining to the fourth aspect of the invention, wherein the failure resolution data include the date and time when the failure was resolved.

In the present invention, the failure resolution data include the date and time when the failure was resolved. Consequently, the remote monitoring system can utilize the date and time when the failure was resolved to reflect this in the repair progress data.

A remote monitoring system pertaining to a sixth aspect of the invention is the remote monitoring system pertaining to any of the second to fifth aspects of the invention, wherein the first state is a state where the failure data are first received or a state where the failure data are first received after the failure has been resolved. The second state is a state where repair has been requested with respect to the failure or a state where the course of the failure is being followed. The third state is a state where the failure has been resolved.

In the present invention, the repair progress of the repair progress data can be manually changed from a state where the failure data are first received which is an initial state (that is, "new") to a state where repair has been requested with respect to the failure (that is, "being repaired") or a state where the course of the failure is being followed (that is, "being followed"). Moreover, the repair progress of the repair progress data can be manually changed from "new", "being repaired" or "being followed" to "repair completed".

Consequently, by checking the repair progress, the concerned party can distinguish whether the failure is a new failure, whether the failure is being repaired, whether the course of the failure is being followed, or whether repair has been completed, and the remote monitoring system can judge whether or not to transmit a failure report depending on that repair progress.

A remote monitoring system pertaining to a seventh aspect of the invention is the remote monitoring system pertaining to any of the first to sixth aspects of the invention, wherein the failure data include failure codes assigned by category of the failure. The new failure determining means determines whether or not the failure data are new per each of the failure codes. The repair progress data generating means generates the repair progress data per each of the failure codes. The failure report transmitting means transmits the failure report associated with the failure code.

In the present invention, the failure data are processed per failure code. Consequently, when a similar failure has occurred, a situation where the remote monitoring system uselessly transmits a failure report can be prevented.

A remote monitoring system pertaining to an eighth aspect of the invention is the remote monitoring system pertaining to any of the first to seventh aspects of the invention, wherein the failure report transmitting means transmits the failure report by email.

In the present invention, the failure report transmitting means transmits the failure report by email. Consequently, the remote monitoring system can inform the concerned party of the occurrence of a failure regardless of the temporal circumstances of the concerned party and rapidly.

A remote monitoring system pertaining to a ninth aspect of the invention is the remote monitoring system pertaining to any of the first to eighth aspects of the invention, wherein the failure data include the date and time when the failure occurred.

In the present invention, the failure data include the date and time when the failure occurred. Consequently, the remote monitoring system can utilize the date and time when the failure occurred to reflect this in the repair progress data.

### <Advantageous Effects of Invention>

In the remote monitoring system pertaining to the first aspect of the invention, the remote monitoring system transmits a failure report only when the failure data are new, and the remote monitoring system can stop the failure report when the same type of failure continues to occur, for example. For this reason, a situation where the remote monitoring system transmits the same type of failure report several times to the concerned party can be prevented, and a situation where the concerned party feels burdened can be controlled.

In the remote monitoring system pertaining to the second aspect of the invention, the repair progress can be managed in greater detail.

In the remote monitoring system pertaining to the third aspect of the invention, the failure report transmitting means does not transmit a failure report even when it has again received failure data relating to a failure for which it has already transmitted a failure report and for which repair has not been completed. For this reason, a situation where the remote monitoring system transmits the same type of failure report several times to the concerned party can be prevented, and a situation where the concerned party feels burdened can be controlled.

In the remote monitoring system pertaining to the fourth aspect of the invention, when the failure has been resolved, such as when repair has been completed, for example, the remote monitoring system can automatically update the repair progress from the first state or the second state to the third state. That is, the remote monitoring system can utilize the fact that the failure has been resolved to automatically reflect this in the repair progress. For this reason, the burden involved in the concerned party updating the repair progress can be alleviated.

In the remote monitoring system pertaining to the fifth aspect of the invention, the remote monitoring system can utilize the date and time when the failure was resolved to reflect this in the repair progress data.

In the remote monitoring system pertaining to the sixth aspect of the invention, by checking the repair progress, the concerned party can distinguish whether the failure is a new failure, whether the failure is being repaired, whether the course of the failure is being followed, or whether repair has been completed, and the remote monitoring system can judge whether or not to transmit a failure report depending on that repair progress.

In the remote monitoring system pertaining to the seventh aspect of the invention, when a similar failure has occurred, a situation where the remote monitoring system uselessly transmits a failure report can be prevented.

In the remote monitoring system pertaining to the eighth aspect of the invention, the remote monitoring system can inform the concerned party of the occurrence of a failure regardless of the temporal circumstances of the concerned party and rapidly.

In the remote monitoring system pertaining to the ninth aspect of the invention, the remote monitoring system can utilize the date and time when the failure occurred to reflect this in the repair progress data.

### BRIEF DESCRIPTION OF THE DRAWINGS

FIG. 1 is a schematic configuration diagram of a facility device monitoring system of the present embodiment.
FIG. 2 is an internal configuration diagram of a monitoring device.
FIG. 3 is a diagram showing flows of control signals and data in the monitoring device.
FIG. 4 is an internal configuration diagram of a facility device monitoring server.
FIG. 5 is a diagram showing flows of control signals and data in the facility device monitoring server.
FIG. 6 is a hard disk conceptual diagram of the facility device monitoring server.
FIG. 7 is a flowchart showing a flow of failure data etc. processing that is executed in the facility device monitoring system.
FIG. 8 is a flowchart showing a flow of failure data processing that is executed in the facility device monitoring system.
FIG. 9 is a flowchart showing a flow of failure resolution data processing that is executed in the facility device monitoring system.
FIG. 10 is a flowchart showing a flow of changed data processing that is executed in the facility device monitoring system.

### EXPLANATION OF THE REFERENCE NUMERALS

- 3: Monitoring Device (Management device)
- 5: Multi-type Air Conditioner (Facility Device)
- 6: Public Line (Line)
- 7: User Terminal (Repair Progress Updating Means)
- 10: Facility Device Monitoring System (Remote Monitoring System)
- 14c: Air Conditioning Monitoring Application (Repair Progress Updating Means)
- 14e: Mask Checking and Updating Application (New Failure Determining Means)
- 14f: Repair Progress Data Registering Application (Repair Progress Data Generating Means)
- 14g: Failure Email Transmitting Application (Failure Report Transmitting Means)
- 22: Input Device (Repair Progress Updating Means)
- 24: Modem (Operating Data Receiving Means)

### BEST MODE FOR CARRYING OUT THE INVENTION

### <Configuration of Facility Device Monitoring System>

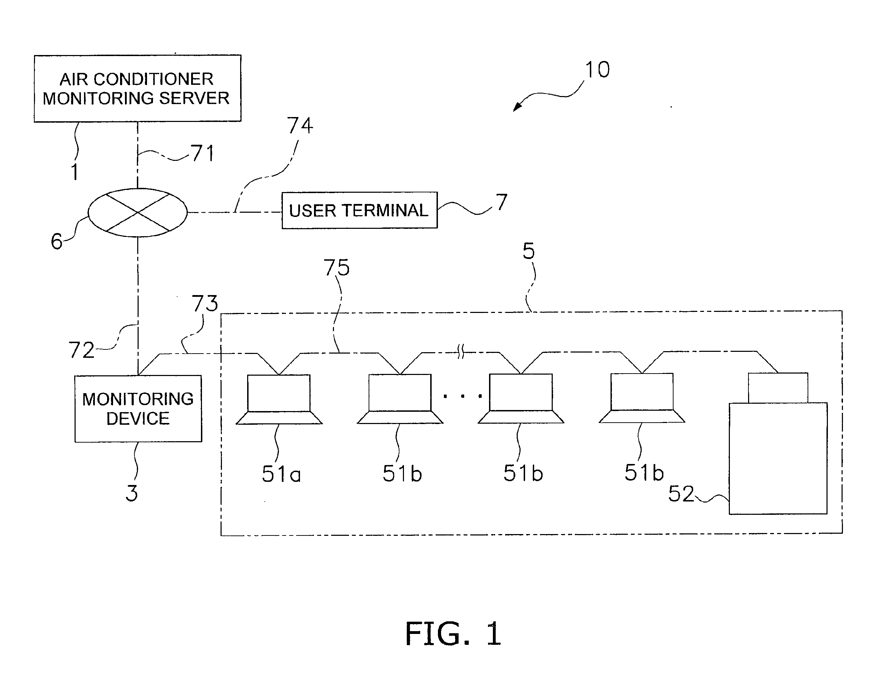

A facility device monitoring system 10 is, as shown in FIG. 1, mainly configured from a multi-type air conditioner 5, a monitoring device 3, a facility device monitoring server 1, a public line 6 and a user terminal 7. The facility device monitoring server 1 and the public line 6 are interconnected by a first communication line 71, the public line 6 and the monitoring device 3 are interconnected by a second communication line 72, the monitoring device 3 and the multi-type air conditioner 5 are interconnected by a third communication line 73, and the user terminal 7 and the public line 6 are interconnected by a fourth communication line 74.

### <Components of Facility Device Monitoring System>

### (1) Multi-type Air Conditioner

In the multi-type air conditioner 5, as shown in FIG. 1, plural indoor units 51a and 51b are connected via a refrigerant pipe (not shown) and a fifth communication line 75 with respect to one (may also be plural) outdoor unit 52. This multi-type air conditioner 5 has the functions of cooling, heating, and controlling the humidity of rooms inside an architectural structure such as a building. Here, the plural indoor units 51a and 51b are classified into one indoor unit main unit 51a and other indoor unit sub units 51b, and the indoor unit main unit 51 a is connected by the third communication line 73 to the monitoring device 3. Further, the indoor unit main unit 51a, the plural indoor unit sub units 51b and the outdoor unit 52 are interconnected by a fifth communication line 75.

### (2) Monitoring Device

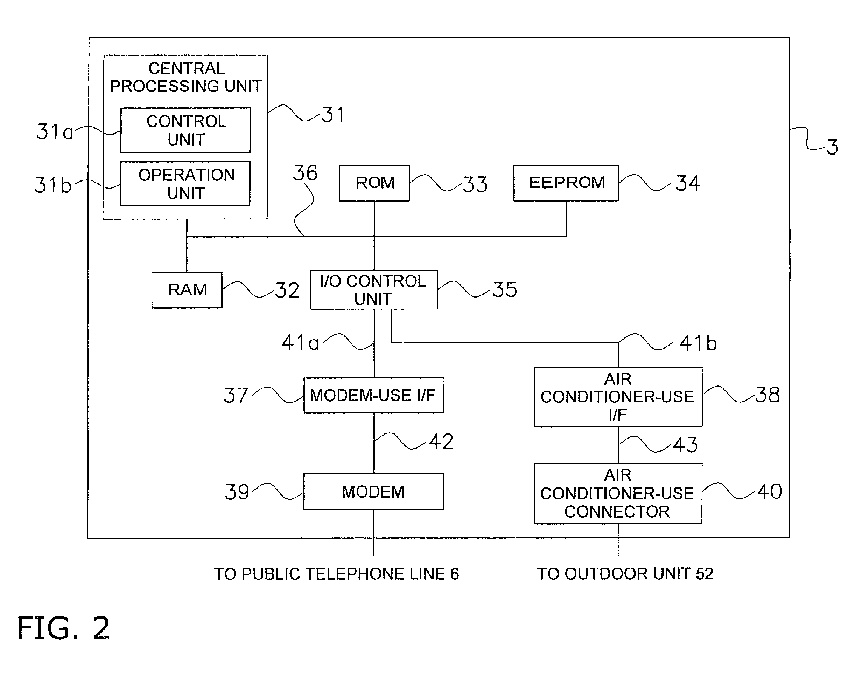

The monitoring device 3 is, as shown in FIG. 2, a monitoring control device of the multi-type air conditioner 5 and is mainly configured from a central processing unit 31, a RAM (Random Access Memory) 32, a ROM (Read Only Memory) 33, an EEPROM 34, an I/O control unit 35, a modem-use interface 37, an air conditioner-use interface 38, a modem 39 and an air conditioner-use connector 40. Here, the central processing unit 31, the RAM 32, the ROM 33, the EEPROM 34 and the I/O control unit 35 are a microcomputer, for example, and are connected to each other by a first bus line 36 to configure one integrated circuit. Further, the modem-use interface 37 and the air conditioner-use interface 38 are printed circuit boards and the like, for example, and are connected to the I/O control unit 35 via second bus lines 41a and 41b. Further, the modem 39 is connected to the modem-use interface 37 via a first communication line 42. Further, the air conditioner-use connector 40 is connected to the air conditioner-use interface 38 via a second communication line 43.

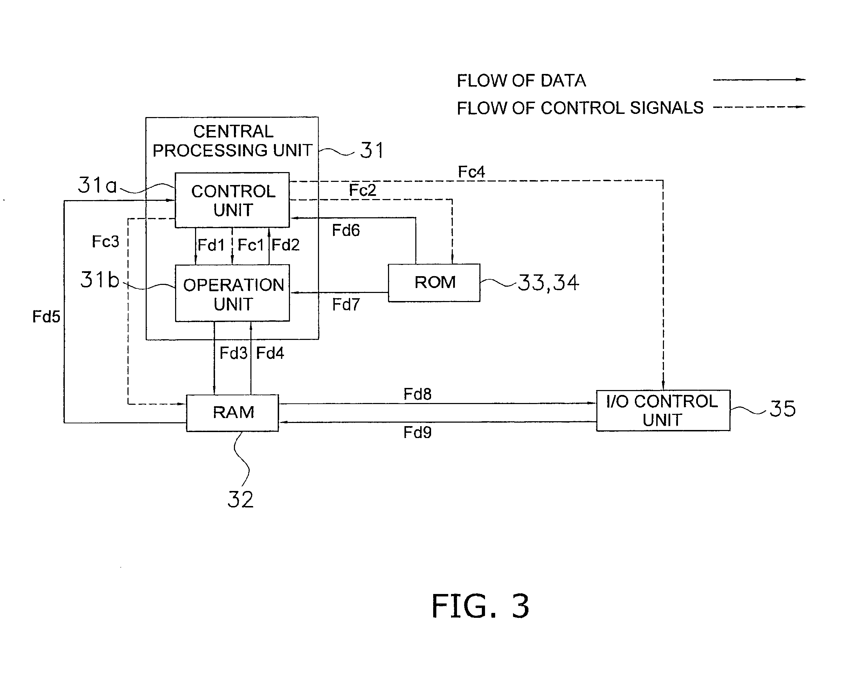

The central processing unit 31 mainly has a control unit 31a and an operation unit 31b. As shown in FIG. 3, the control unit 31a reads a control program stored in the ROM 33 (see Fd6) and instructs the operation unit 31b, the RAM 32, the ROM 33, the EEPROM 34 and the I/O control unit 35 to operate in accordance with the control program it has read (see Fc1 to Fc4). As shown in FIG. 3, the operation unit 31b acquires necessary data from the control unit 31a, the RAM 32, the ROM 33 and the EEPROM 34 (see Fd1, Fd4 and Fd7) and performs operation processing (e.g., arithmetic operation processing and logic operation processing) in accordance with a command from the control unit 31a. Further, this operation unit 31 b can supply processing result data of operation processing to the control unit 31a in accordance with a command from the control unit 31a (see Fd2). Further, this operation unit 31b can write processing result data of operation processing in the RAM 32 and the EEPROM 34 in accordance with a command from the control unit 31a (see Fd3).

As shown in FIG. 3, the RAM 32 can supply data such as various types of programs to the control unit 31 a in accordance with an instruction from the control unit 31 a (see Fd5). Further, this RAM 32 acquires from the I/O control unit 35 and temporarily stores data (see Fd9) and temporarily stores data transmitted from the operation unit 31b (see Fd3). Further, the RAM 32 transmits to the I/O control unit 35 data it is temporarily storing in accordance with a command from the control unit 31a (see Fd8).

The ROM 33 stores the control program and various types of data. Additionally, as shown in FIG. 3, this ROM 33 supplies those to the control unit 31a in accordance with an instruction from the control unit 31a (see Fd6). Further, this ROM 33 can supply various types of data to the operation unit 31 b in accordance with an instruction from the control unit 3 1 a (see Fd7).

The EEPROM 34 is an electrically rewritable ROM and stores monitoring data of the multi-type air conditioner 5.

The I/O control unit 35 inputs to the RAM 32 data incoming to the modem 39 and data transmitted from the multi-type air conditioner 5 (see Fd9) and transmits to the multi-type air condition device 5 various types of data stored in the RAM 32 and control signals.

The modem-use interface 37 and the air conditioner-use interface 38 are connected to the modem 39 and the air conditioner-use connector 40 via the communication lines 42 and 43, receive data incoming to the modem 39 and data transmitted from the multi-type air conditioner 5 and at the same time convert those data into a format that the central processing unit 31 is capable of processing, and convert data and control signals outputted from the I/O control unit 35 to the modem 39 and the multi-type air conditioner 5 into a format that the modem 39 and the multi-type air conditioner 5 are capable of processing.

The modem 39 transmits various types of data relating to the multi-type air conditioner 5 stored in the EEPROM 34 to the facility device monitoring server 1 via the public line 6 every 30 minutes in accordance with an instruction from the control unit 31a.

As shown in FIG 2. the indoor unit main unit 51a of the multi-type air conditioner 5 is connected to the air conditioner-use connector 40.

### (3) Facility Device Monitoring Server

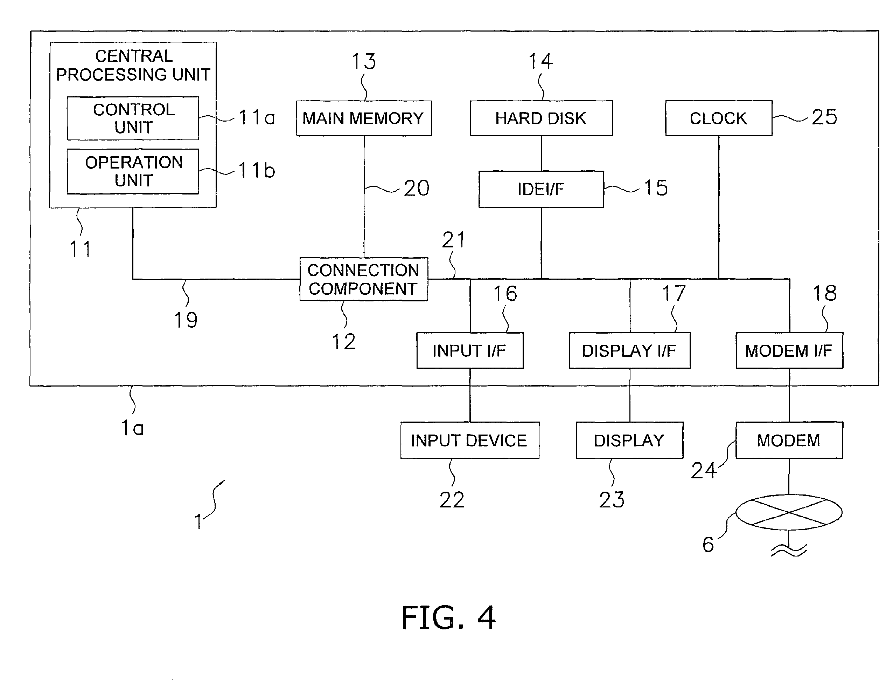

The facility device monitoring server 1 is, as shown in FIG. 4, mainly configured from a server body 1a, an input device 22, a display 23, a modem 24 and a clock 25.

The server body 1a is, as shown in FIG. 4, mainly configured from a central processing unit 11, a main memory 13, a hard disk 14, a connection component 12, an IDE interface 15, an input interface 16, a display interface 17, a modem interface 18 and the clock 25. Additionally, in this server body 1a, the central processing unit 11 is connected to the connection component 12 via a first bus line 19, the main memory 13 is connected to the connection component 12 via a second bus line 20, and the various types of interfaces 16 to 18 are connected to the connection component 12 via a third bus line 21.

### (Central Processing Unit)

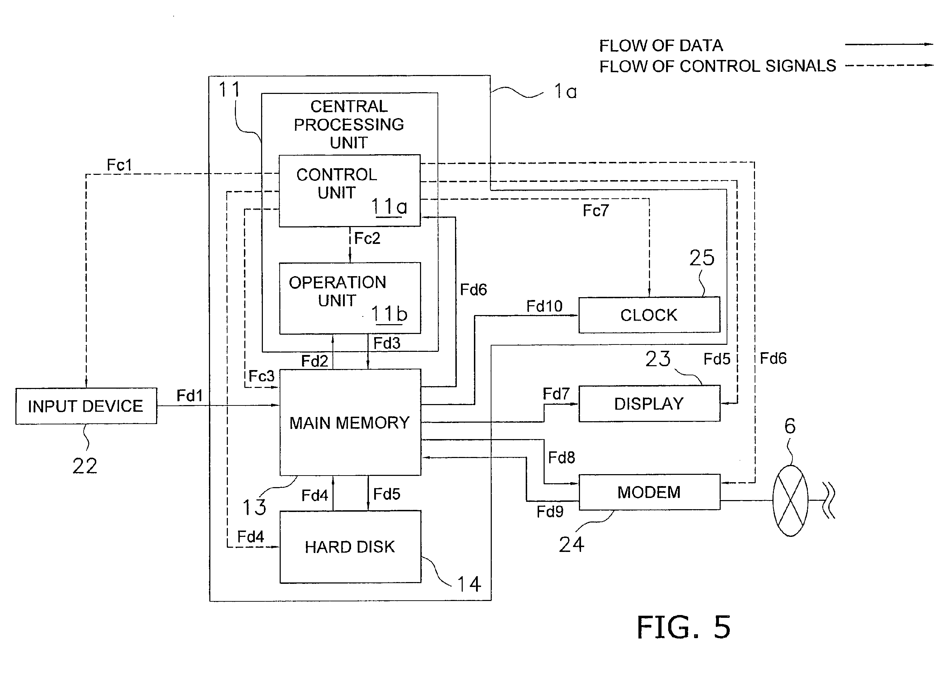

The central processing unit 11 is a semiconductor chip called a microprocessor, for example, and is mainly configured from a control unit 11a and an operation unit 11b (in addition, it may also include a primary cache memory and a secondary cache memory). As shown in FIG. 5, the control unit 11 a reads a program temporarily stored in the main memory 13 (see Fd6) and instructs each of the units 11b to 14 and each of the devices 22 to 25 to operate in accordance with the program it has read (see Fc1 to Fc7). The operation unit 11b acquires necessary data from the main memory 13 (see Fd2) and performs operation processing (e.g., arithmetic operation processing and logic operation processing) in accordance with a command from the control unit 11a.

### (Main Memory)

The main memory 13 is a semiconductor chip such as a RAM (Random Access Memory), for example. The main memory 13 acquires from the hard disk 14 and temporarily stores programs and data (see Fd4), temporarily stores data inputted in the input device 22 (see Fd1); and temporarily stores data transmitted from the operation unit 11b and the modem 24 (see Fd3 and Fd10). Further, this main memory 13 transmits data and the like it is temporarily storing to each of the units 11b to 14 and each of the devices 22 to 25 in accordance with a command from the control unit 11 a (see Fd2, Fd5, Fd7, Fd8, Fd9 and Fd10).

### (Connection Component)

The connection component 12 is a semiconductor chip such as a chip set.

### (Hard Disk)

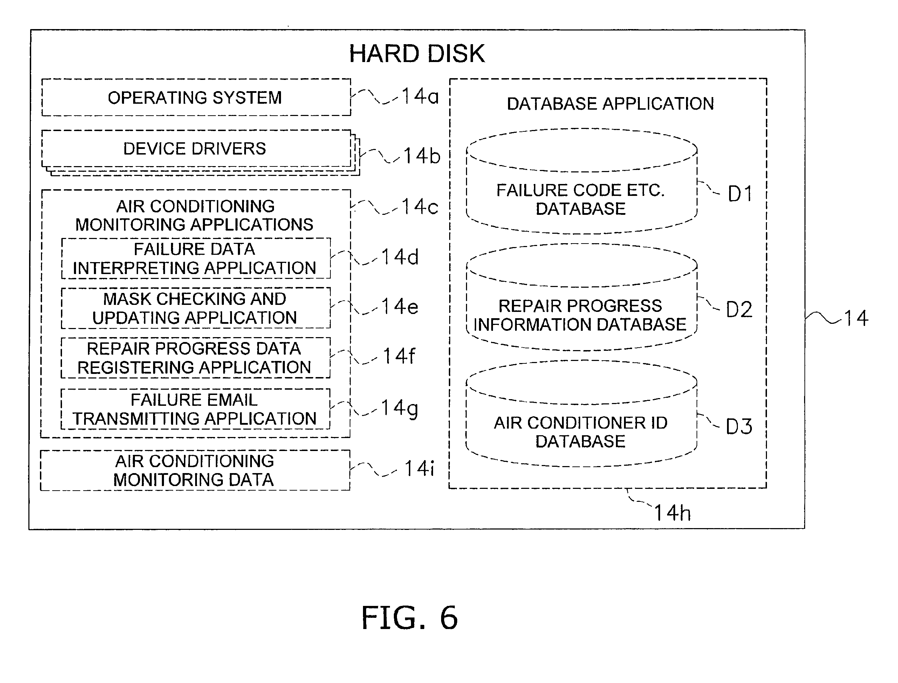

In the hard disk 14, as shown in FIG. 6, there are stored an operating system 14a, device drivers 14b, programs such as air conditioning monitoring applications 14c and a database application 14h, and air conditioning monitoring data 14i. The hard disk 14 supplies programs and data to the main memory 13 (see Fd4) and stores data transmitted from the main memory 13 (see Fd5) in accordance with a command from the control unit 11 a. This hard disk 14 may also be an external type.

The operating system 14a is, for example, WINDOWS (registered trademark), MAC OS (registered trademark), OS/2, UNIX (registered trademark) (e.g., Linux (registered trademark)) or BeOS (registered trademark) and performs hardware monitoring of each of the units 12 to 14, each of the various types of interfaces 15 to 18 and each of the devices 22 to 24, provision of user interfaces, monitoring of various types of data, and processing of common portions of applications. The device drivers 14b are dedicated programs that are prepared with respect to the hard disk 14, the connection component 12 and each of the devices 22 to 24 and act as bridges for the operating system 14a to control the hard disk 14, the connection component 12 and each of the devices 22 to 24.

The air conditioning monitoring applications 14c are programs for storing, in a predetermined database, monitoring data and the like of the multi-type air conditioner 5 transmitted from the monitoring device 3 to the facility device monitoring server 1 and for appropriately processing the monitoring data to construct desired data. In the present embodiment, the air conditioning monitoring applications 14c are always executed; when monitoring data are received in the modem 24, the operation unit 11b stores those monitoring data in the hard disk 14 after converting the monitoring data into a prescribed data format (in the present embodiment, conversion from a column text format to XML format) in accordance with an instruction from the control unit 11a. In these air conditioning monitoring applications 14c, in order to make it possible for the facility device monitoring server 1 to optimally monitor depending on the type and configuration of the air conditioner (in the present embodiment, the multi-type air conditioner 5) to which the facility device monitoring server 1 is connected, there are plural applications (specifically, a failure data interpreting application 14d, a repair progress data registering application 14e, a mask checking and updating application 14f a failure email transmitting application 14g. etc.). The failure data interpreting application 14d is an application which, when the multi-type air conditioner 5 or the monitoring device 3 has failed, interprets failure data transmitted from the monitoring device 3 to the facility device monitoring server 1 on the basis of a failure code etc. database D1 and an air conditioner ID database D3 described later. The "failure data" referred to here include an air conditioner ID of the failed multi-type air conditioner 5, a failure code, and a failure occurrence date and time. Further, the repair progress data registering application 14e registers, as repair progress data in a repair progress information database D2 described later, the failure data interpreted by the failure data interpreting application 14d. The mask checking and updating application 14f is an application that checks whether or not those failure data are in a mask state (described later) and creates and deletes mask data (described later). Further, the failure email transmitting application 14g is an application which, when the failure data checked for being in the mask state by the mask checking and updating application 14f were not in the mask state, transmits to the concerned party (remote monitoring system manager, person in charge of maintenance, user, etc.) by email a message associated with a failure code on the basis of the failure code etc. database D1 described later.

The database application 14h is a relational database application and holds the failure code etc. database D1, the repair progress information database D2 and the air conditioner ID database D3. The failure code etc. database D1 is a database in which failure codes, failure descriptions and messages corresponding to those failure descriptions are associated. Further, the "messages" referred to here are messages for notifying the concerned party that a failure has occurred and are language such as measures to be taken with respect to failures corresponding to failure codes. The repair progress information database D2 is a database in which air conditioner IDs for recognizing the indoor units 51a and 5 1 b and the outdoor unit 52 of the multi-type air conditioner 5, failure codes, failure descriptions, failure occurrence dates and times and repair progress statuses are associated. In the "repair progress statuses'' referred to here, there are "new", which indicates that a failure is a new occurrence (that is, a state where failure data are first received or a state where failure data are first received after a failure has been resolved), "being repaired", which is a state where repair has been requested with respect to a failure, "being followed", which is a state where a failure is being followed, and "repair completed", which is a state where a failure has been resolved. Further, these repair progress statuses are capable of being changed by logging in from an Internet browser or the like through a public line or the like to the facility device monitoring server 1 from the user terminal 7 or the input device 22 connected to the facility device monitoring server 1. The air conditioner ID database D3 is a database in which the aforementioned air conditioner IDs, model information and installation locations are associated. Further, in this database application 14h, there are described various commands for allowing the central processing unit 11 to perform various processing.

### (Interfaces)

The IDE (Integrated Drive Electronics) interface 15 connects the hard disk 14 to the connection component 12. The input interface 16 is a PS/2, USB, IEEE 1212, RS232 or IrDA (Infrared Data Association) interface, for example, and connects the input device 22 such as a keyboard, mouse, scanner or OCR (Optical Character Reader) for inputting data to the main memory 13. The display interface 17 is an AGP (Accelerated Graphics Port), PCI (Peripheral Component Interconnect) or RS232 interface, for example, and connects the display 23 such as a CRT display, liquid crystal display or plasma display for displaying, as characters and images, data transmitted from the main memory 13. The modem interface 18 connects the modem 24 for communicably connecting to the public line 6 or the like.

### (4) User Terminal

The user terminal 7 is a terminal that is connectable to the public line 6. The user terminal 7 may be a mobile telephone carried by a user who is out or may be a computer installed in an office where the multi-type air conditioner 5 is installed or in an outside location.

### <Failure Data Etc. Processing Content of Facility Device Monitoring System>

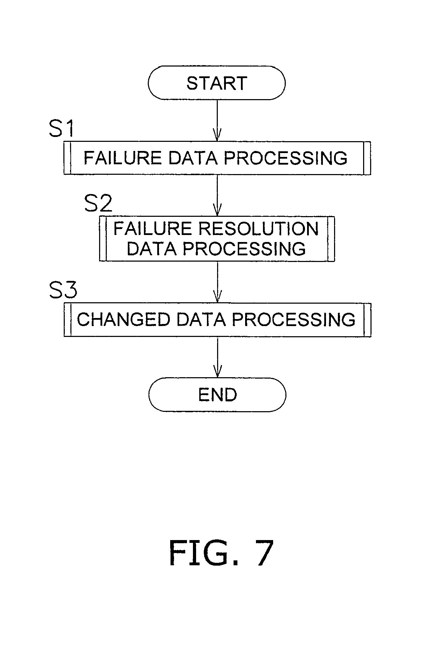

In the facility device monitoring system 10 pertaining to the embodiment of the present invention, failure data processing is performed in accordance with the flowchart shown in FIG. 7. In the facility device monitoring system 10, the processing shown in FIG. 7 is executed every certain amount of time. Further, these processing histories all become saved in the hard disk 14 as the repair progress information database D2. Additionally, when the saved processing histories exceed a predetermined capacity, the facility device monitoring server 1 automatically deletes the processing histories beginning with the oldest processing history or performs processing such as notifying the concerned party that the saved processing histories exceed the predetermined capacity.

In FIG. 7, in step S1, the facility device monitoring server 1 executes failure data processing (the failure data processing will be described later). When step S1 ends, the facility device monitoring server 1 moves to step S2. In step S2, the facility device monitoring server 1 executes failure resolution data processing (the failure data resolution processing will be described later). When step S2 ends, the facility device monitoring server 1 moves to step S3. In step S3, the facility device monitoring server 1 executes changed data processing (the changed data processing will be described later).

The failure data processing, the failure resolution data processing and the changed data processing will be described in detail below.

### (Failure Data Processing)

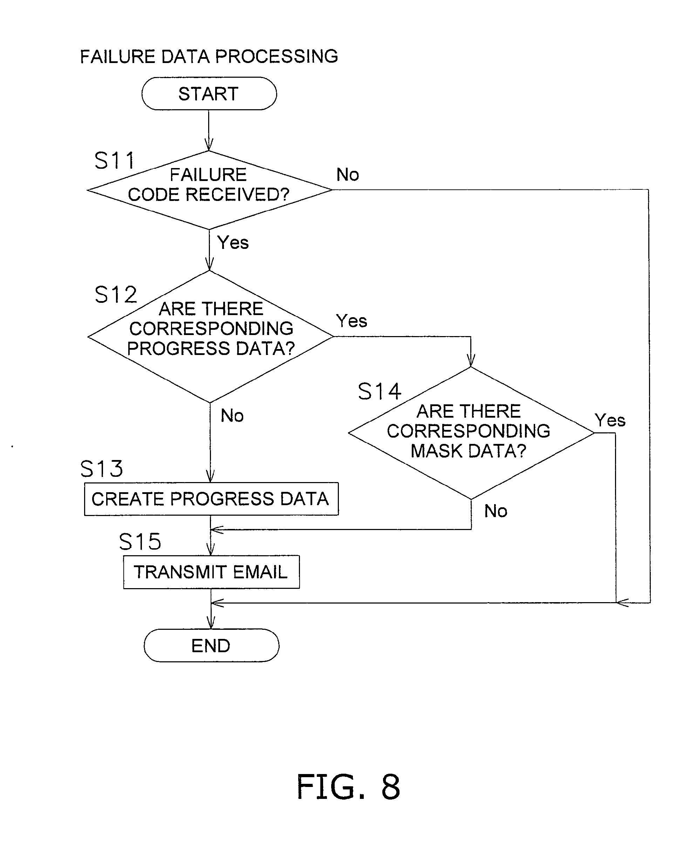

In the facility device monitoring system 10 pertaining to the embodiment of the present invention, the failure data processing is executed in accordance with the flowchart shown in FIG. 8.

In FIG. 8, in step S11, the facility device monitoring server 1 checks whether or not it has received failure data transmitted from the monitoring device 3. When the facility device monitoring server 1 has received failure data, it moves to step S12, and when the facility device monitoring server 1 has not received failure data, it ends the failure data processing.

In step S12, the facility device monitoring server 1 references the failure code etc. database D1 from the failure code of the failure data it has received to extract the failure description and references the air conditioner ID database D3 from the air conditioner ID of the failure data it has received to identify the air conditioner (model and installation location) that has failed. Then, the facility device monitoring server 1 references the repair progress database D2 to check whether or not repair progress data corresponding to the failed air conditioner and the failure code exist. Here, when there are no repair progress data corresponding to the failed air conditioner and the failure code, the facility device monitoring server 1 moves to step S13, and when there are repair progress data corresponding to the failed air conditioner and the failure code, the facility device monitoring server 1 moves to step S14.

In step S13, the facility device monitoring server 1 registers, in the repair progress information database D2, repair progress data in which the air conditioner ID of the failed air conditioner, the failure code, the failure description extracted in step S12, the failure occurrence date and time and the repair progress status are associated. At this time, the facility device monitoring server 1 registers the repair progress data using "new" as the repair progress status. When step S13 ends, the facility device monitoring server 1 moves to step S15.

In step S14, the facility device monitoring server 1 checks whether or not the repair progress data corresponding to the failed air conditioner and the failure code are in a mask state. The "mask state" referred to here is a state where the repair progress status is "being repaired" or "being followed", and when the repair progress data are in a mask state, there exist mask data corresponding to the failed air conditioner and the failure code. That is, in step S14, the facility device monitoring server 1 checks whether or not there are mask data corresponding to the failed air conditioner and the failure code (that is, the repair progress data). When there are no mask data in the repair progress data, the facility device monitoring server 1 moves to step S15, and when there are mask data in the repair progress data, the facility device monitoring server 1 ends the failure data processing.

In step S15, the facility device monitoring server 1 references the failure code etc. database on the basis of the failure code and transmits the corresponding message by email to the concerned party. When step S15 ends, the failure data processing ends.

### (Failure Resolution Data Processing)

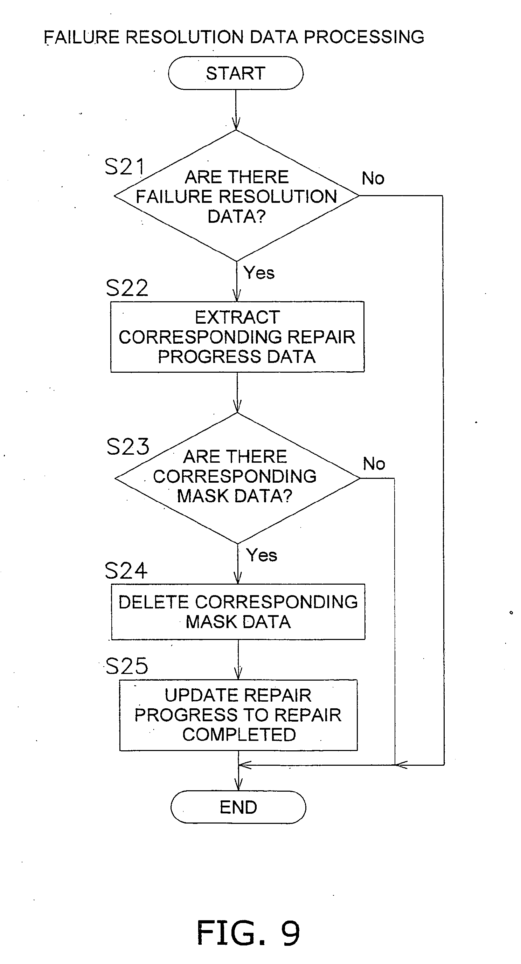

In the facility device monitoring system 10 pertaining to the embodiment of the present invention, the failure resolution data processing is executed in accordance with the flowchart shown in FIG. 9.

Among the failures occurring in the multi-type air conditioner 5 or the monitoring device 3, there are failures that are resolved when the power is switched OFF and is then switched ON again. When the monitoring device 3 detects the resolution of a failure, it transmits the date and time when the failure was resolved (failure resolution date and time) and the failure code to the facility device monitoring server 1 as failure resolution data. The failure resolution data processing is processing which, when there are failure resolution data, updates the repair progress of the repair progress data corresponding to the resolved failure to "repair completed" and automatically ends updating of the repair progress data corresponding to that failure. Further, at this time the failure resolution data processing deletes the mask data created by the failure data processing, and when a new failure occurs, a failure report is transmitted by email to the concerned party. This failure resolution data processing will be described below in accordance with FIG. 9.

In FIG. 9, in step S21, the facility device monitoring server 1 checks whether or not there are failure resolution data in operating data transmitted from the monitoring device 3. The "failure resolution data" referred to here are data transmitted when the monitoring device 3 no longer detects a failure it had detected from the multi-type air conditioner 5 or the monitoring device 3 itself, and the "failure resolution data" include the failure code and the failure resolution date and time. When the facility device monitoring server 1 receives failure resolution data, it moves to step S22, and when the facility device monitoring server 1 does not receive failure resolution data, it ends the failure resolution data processing.

In step S22, the facility device monitoring server 1 references the repair progress information database D2 and extracts the repair progress data corresponding to the failure code of the resolved failure. When step S22 ends, the facility device monitoring server 1 moves to step S23.

In step S23, the facility device monitoring server 1 checks whether or not there are mask data corresponding to the repair progress data extracted in step S22. When there are corresponding mask data in the repair progress data, the facility device monitoring server 1 moves to step S24, and when there are no corresponding mask data, the facility device monitoring server 1 ends the failure resolution data processing.

In step S24, the facility device monitoring server 1 deletes the corresponding mask data it checked for in step S23. When step S24 ends, the facility device monitoring server 1 moves to step S25.

In step S25, the facility device monitoring server 1 updates the repair progress of the repair progress data corresponding to the failure code of the resolved failure to "repair competed". When step S25 ends, the facility device monitoring server 1 ends the failure resolution data processing.

### (Changed Data Processing)

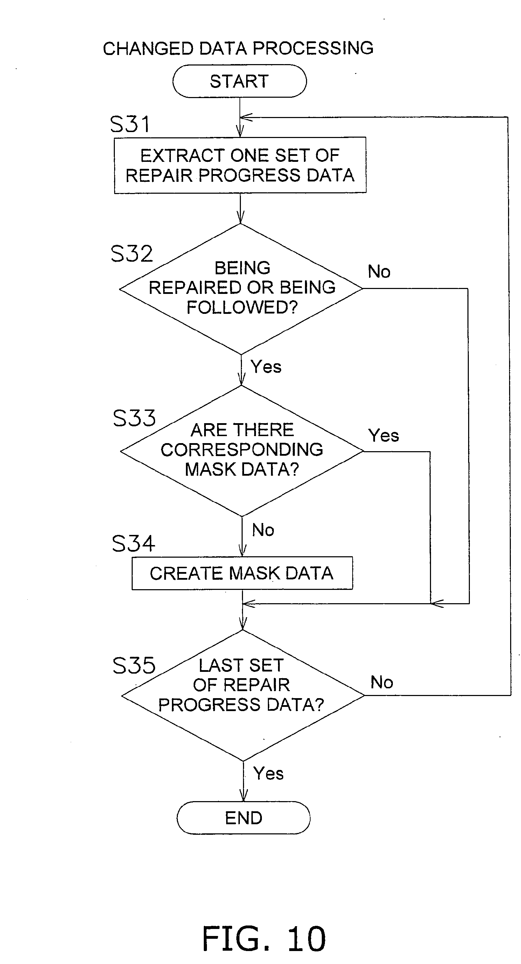

In the facility device monitoring system 10 pertaining to the embodiment of the present invention, the changed data processing is executed in accordance with the flowchart shown in FIG. 10.

The changed data processing is processing that is performed when the concerned party has changed the repair progress of the repair progress data with the input device 22 of the facility device monitoring server 1 or the user terminal 7. The changed data processing will be described below in accordance with FIG. 10.

In FIG. 10, in step S31, the facility device monitoring server 1 references the repair progress information database D2 and extracts one set of repair progress data. When step S31 ends, the facility device monitoring server 1 moves to step S32.

In step S32, the facility device monitoring server 1 checks whether or not the repair progress of the repair progress data extracted in step S31 is "being repaired" or "being followed". In step S32, when the repair progress of the extracted repair progress data is "being repaired" or "being followed", the facility device monitoring server 1 moves to step S33, and when the repair progress of the extracted repair progress data is not "being repaired" or "being followed", the facility device monitoring server 1 moves to step S35.

In step S33, the facility device monitoring server 1 checks whether or not there are mask data corresponding to the repair progress data extracted in step S31. In step S33, when there are no corresponding mask data, the facility device monitoring server 1 moves to step S34, and when there are corresponding mask data, the facility device monitoring server 1 moves to step S35.

In step S34, the facility device monitoring server 1 creates mask data corresponding to the repair progress data and registers the mask data in the repair progress data. When step S34 ends, the facility device monitoring server 1 moves to step S35.

In step S35, the facility device monitoring server 1 checks whether or not the set of repair progress data extracted in S31 are the last set of repair progress data. When the set of repair progress data are the last set of repair progress data, the changed data processing ends, and when the set of repair progress data are not the last set of repair progress data, the facility device monitoring server 1 returns to step S31.

### <Characteristics>

(1)
   In the embodiment of the present invention, when the multi-type air conditioner 5 or the monitoring device 3 has failed, the facility device monitoring server 1 determines whether or not the failure data transmitted from the monitoring device 3 are new and, when the failure data are new, issues a failure report by email to the concerned party. That is, when the failure data are not new (when there are corresponding mask data in the repair progress data), the facility device monitoring server 1 stops the failure report by email to the concerned party.
   Consequently, the facility device monitoring server 1 transmits a failure report to the concerned party only when the failure data are new, and the facility device monitoring server 1 can stop the failure report when the same type of failure continues to occur, for example. For that reason, a situation where the facility device monitoring server 1 transmits the same type of failure report to the concerned party can be prevented, and a situation where the concerned party feels burdened can be controlled.
(2)
   In the embodiment of the present invention, the repair progress of the repair progress data can be updated from "new" to "being repaired" or "being followed" and can also be updated from "new", "being repaired" or "being followed" to "repair completed" by the facility device monitoring server 1 or the user terminal 7.
   Consequently, the concerned party can update the repair progress of the repair progress data in regard to a response or the like made with respect to a failure, so the repair progress of the failure can be managed in greater detail at that time.
(3)
   In the embodiment of the present invention, when the facility device monitoring server 1 has received failure resolution data, the facility device monitoring server 1 automatically updates the repair progress of the repair progress data corresponding to that failure from "new", "being repaired" or "being followed" to "repair completed".
   Consequently, when a failure has been resolved, such as when repair has been completed, the facility device monitoring server 1 can automatically update the repair progress from "new", "being repaired" or "being followed" to "repair completed". That is, the facility device monitoring server 1 can automatically reflect the fact that a failure has been resolved in the repair progress. For this reason, the burden involved in the concerned party updating the repair progress can be alleviated.

### <Modifications>

(1)
   In the above-described embodiment, the multi-type air conditioner 5 is employed as a facility device, but the facility device is not limited to only the multi-type air conditioner 5; a separate-type air conditioner or a duct-type air conditioner may also be employed, and the facility device may also be a lighting device, a power receiving facility device, a water supply and drainage sanitation facility device, etc.
(2)
   In the above-described embodiment, the monitoring device 3 transmits the failure data and the failure resolution data to the facility device monitoring server 1, but the invention is not limited to this and may also be configured such that the indoor unit main unit 51a, for example, of the multi-type air conditioner 5 transmits the failure data to the facility device monitoring server 1. Further, this may also be the outdoor unit 52 of the multi-type air conditioner 5.
(3)
   In the above-described embodiment, the facility device monitoring server 1 performs processing of the failure data and the like every certain amount of time, but the invention is not limited to this and may also be configured such that, for example, the facility device monitoring server 1 performs the failure data processing every time it receives the failure data, performs the failure resolution data processing every time it receives the failure resolution data, and performs the changed data processing every time there is a change in the repair progress of the repair progress data.

### INDUSTRIAL APPLICABILITY

The remote monitoring system pertaining to the present invention can prevent a situation where the remote monitoring system transmits the same type of failure report several times to a concerned party, can control a situation where the concerned party feels burdened, and is useful as a remote monitoring system or the like that is connected via a public line to a facility device and a management device that manages that facility device, with the remote monitoring system processing operating data of the facility device transmitted from the facility device or the management device.

## Claims

1. A remote monitoring system (10) comprising:
operating data receiving means (24) that is connected via a line (6) to a facility device (5) or a management device (3) that manages the facility device, with the operating data receiving means receiving, as one set of operating data, failure data transmitted from the facility device or the management device;
failure report transmitting means (14g) that transmits a failure report associated with the failure data to a concerned party who is a remote monitoring system manager, a person in charge of maintenance and a user when the failure report transmitting means has received the failure data;
new failure determining means (14e) that determines whether or not the failure data are new;
repair progress data generating means (14f) generates repair progress data using repair progress of the failure as a first state when the failure data are new; and
repair progress updating means (7, 22, 14c) that is capable of the concerned party updating and inputting the repair progress of the repair progress data from the first state to a second state differing from the first state,
wherein the failure report transmitting means stops transmission of the failure report when the repair progress is the second state.

2. The remote monitoring system (10) according to claim 1, wherein
the repair progress updating means (7, 22) is further capable of updating the repair progress from the first state or the second state to a third state differing from the first state and the second state.

3. The remote monitoring system (10) according to claim 2, wherein
the new failure determining means (14e) determines that the failure data are new when there are no repair progress data corresponding to the failure data or when the repair progress of the repair progress data corresponding to the failure data is the third state.

4. The remote monitoring system (10) according to claim 2 or 3, wherein
the operating data receiving means (24) is further capable of receiving, as one set of the operating data, failure resolution data transmitted by the facility device or the management device when the failure has been resolved, and
the repair progress updating means (14c) updates the repair progress of the repair progress data corresponding to the failure from the first state or the second state to the third state when the failure resolution data are received.

5. The remote monitoring system (10) according to claim 4, wherein
the failure resolution data include the date and time when the failure was resolved.

6. The remote monitoring system (10) according to any of claims 2 to 5, wherein
the first state is a state where the failure data are first received or a state where the failure data are first received after the failure has been resolved,
the second state is a state where repair has been requested the failure or a state where the course of the failure is being followed, and
the third state is a state where the failure has been resolved.

7. The remote monitoring system (10) according to any of claims 1 to 6, wherein the failure data include failure codes assigned by category of the failure,
the new failure determining means (14e) determines whether or not the failure data are new per each of the failure codes,
the repair progress data generating means (14f) generates the repair progress data per each of the failure codes, and
the failure report transmitting means (14g) transmits the failure report associated with the failure code.

8. The remote monitoring system (10) according to any of claims 1 to 7, wherein the failure report transmitting means (14g) transmits the failure report by email.

9. The remote monitoring system (10) according to any of claims 1 to 8, wherein the failure data include the date and time when the failure occurred.
